# EUROPÄISCHE PATENTSCHRIFT

(11) **EP 0 710 611 B1**
(45) Veröffentlichungstag und Bekanntmachung des Hinweises auf die Patenterteilung: **17.09.1997**
(21) Anmeldenummer: 95890193.6
(22) Anmeldetag: 03.11.1995
(51) Int. Cl.: B65G 1/137, B65G 1/08

(54) **Automatische Anlage zum Kommissionieren von Stückgütern**
Installation for automatically preparing articles
Dispositif pour préparer automatiquement la commande des articles

(30) Priorität: 04.11.1994 AT 2049/94
(43) Veröffentlichungstag der Anmeldung: 08.05.1996
(73) Patentinhaber: KNAPP HOLDING GmbH, 8075 Hart bei Graz (AT)
(72) Erfinder: Freudelsperger, Karl, Dipl-Ing., A-8071 Hausmannstätten (AT)
(74) Vertreter: Weinzinger, Arnulf, Dipl.-Ing.

(56) Entgegenhaltungen:
- EP-A- 0 457 158
- WO-A-87/02016
- BE-A- 899 517
- DE-A- 2 109 832
- DE-U- 9 209 338
- US-A- 3 750 804
- US-A- 4 527 937

## Beschreibung

Die Erfindung betrifft eine automatische Anlage zum Kommissionieren von Stückgütern, mit einem Gestell, in welchem eine Mehrzahl von die Stückgüter aufnehmenden Kanälen in horizontalen und vertikalen Reihen angeordnet sind, wobei die Kanäle für einen Durchlauf der Stückgüter ausgebildet sind und an einem Ende der Kanäle eine Befülleinrichtung und am anderen Ende eine Ausgabestelle zum Anhalten und Ausgeben der Stückgüter vorgesehen sind, und die Anlage ein vor der Ausgabestelle der Kanäle quer zu den Kanälen laufendes Zentralband zum Transportieren der aus den Kanälen ausgegebenen Stückgüter zu einer Sammelstelle aufweist, wobei die Kanäle von der Befüllstelle hin zur Ausgabestelle schräg nach unten geneigt sind, und wobei die Befülleinrichtung ein ansteigend verlaufendes Förderband aufweist, dessen Abgabeseite zu jeder horizontalen Reihe der Kanäle heb- und senkbar ausgebildet ist.

Aus der US 3 624 792 A ist eine Anlage bekannt, bei welcher Schrankfächer gitterartig angeordnet sind, um ein Regal zu bilden. Die in den Schrankfächern enthaltenen Stückgüter werden gezielt aus einem bestimmten Fach mittels pneumatischer Saugeinrichtungen entnommen. Anschließend fällt das entnommene Stückgut in einem Schacht auf ein darunterliegendes Förderband, durch welches es zu einer Sammelstelle geleitet wird. Damit die Stückgüter in den Fächern in Richtung zur Entnahmestelle nachwandern, ist eine Druckfeder vorgesehen, die beim händischen Füllen des Schrankfaches mit Stückgut auch händisch gespannt werden muß, so daß der Füllvorgang zumindest zwei Personen erfordert. Nachteilig bei dieser Anordnung ist auch der Umstand, daß das Stückgut auf das Förderband fällt und dabei beschädigt werden kann. Letzlich ist der Füllvorgang umständlich und zeitaufwendig.

Des weiteren ist in der DE 20 00 016 A ein Durchlaufregal mit einem heb- und senkbaren Gurtband als Entnahmegerät beschrieben, welches an der Abgabeseite des Durchlaufregals angeordnet ist. Im übrigen befaßt sich diese DE 20 00 016 A mit einer Zuteilsperre für das Durchlaufregal; eine Befülleinrichtung wird jedoch nicht beschrieben.

Aus der DE 21 09 832 A ist schließlich eine gattungsgemäße Anlage in Form eines Regals für den automatischen Güterdurchlauf mit einem Gestell bekannt, in welchem waagrechte oder zur Abgabeseite hin abfallende Tragflächen für Stückgüter vorgesehen sind. Weiter sind auf der Befüllseite ebenso wie auf der Abgabeseite Einrichtungen gezeigt, welche je aus einem Waagrechtförderer, einem mit diesem zusammenwirkenden Schrägförderer und einem mit letzterem gekoppelten Hubwagen bestehen. Der Hubwagen ist horizontal verfahrbar und vertikal verstellbar, so daß jede Tragfläche ansteuerbar ist. Diese Einrichtungen, die offensichtlich für voluminöse, schwere Stückgüter vorgesehen sind, haben den Nachteil einer relativ aufwendigen Konstruktion und umständlichen Handhabung.

Aufgabe der Erfindung ist die Schaffung einer Anlage zum Kommissionieren von Stückgütern der eingangs genannten Art, bei welcher die Befüllung und Entleerung der Kanäle einfach und rasch unter Schonung der Stückgüter erfolgt, und bei welcher die Funktion des Transports der Stückgüter in Richtung zur Ausgabestelle der Kanäle automatisch erfolgt.

Diese Aufgabe wird bei der Anlage der vorstehend angeführten Art erfindungsgemäß dadurch gelöst, daß das Zentralband zu jeder horizontalen Reihe der Kanäle heb- und senkbar ausgebildet ist, daß an das ansteigend verlaufende Förderband der Befülleinrichtung ein auf das abgabeseitige Ende dieses Förderbandes folgendes höhenverstellbares Horizontalband anschließt, und daß auf der Oberseite des Horizontalbandes ein Einweiser als Leiteinrichtung zum Einschieben der Stückgüter in die Kanäle angeordnet ist, der in Längsrichtung des Horizontalbandes verstell- und positionierbar ausgebildet ist, und mit dem jeder Kanal zur Befüllung ansteuerbar ist. Durch die heb- und senkbaren Transportbänder auf der Befüllseite der Anlage und auf der Ausgabeseite der Anlage können die horizontalen Reihen der Kanäle rasch und genau angefahren werden. Die dem Horizontalband zugeordnete Leiteinrichtung auf der Befüllseite ermöglicht dabei weiters ein schnelles und präzises Einfüllen des Stückgutes in den dafür ausgewählten Kanal.

Nach einem bevorzugten Merkmal der Erfindung ist vorgesehen, daß am abgabeseitigen Ende des Zentralbandes ein Steigband anschließt, welches mit dem Zentralband gelenkig verbunden ist. Durch diese Maßnahme können die Stückgüter in einfacher Weise vom Niveau des Zentralbandes auf das Niveau eines am Boden aufgestellten weiteren Transportbandes abgesenkt werden.

Eine bevorzugte und zweckmäßige Ausgestaltung der Befülleinrichtung besteht erfindungsgemäß darin, daß am abgabeseitigen Ende des ansteigend verlaufenden Förderbandes eine Umlenkscheibe angeordnet ist, welche das Stückgut auf das höhenverstellbare Horizontalband umleitet, welches mit der Umlenkscheibe mechanisch verbunden ist.

Zum Anhalten und Ausgeben des Stückgutes an der Ausgabestelle hat es sich als besonders günstig erwiesen, wenn an der Ausgabestelle der schräg nach unten geneigten Kanäle ein Flügelradauswerfer angeordnet ist. Diese Ausführungsform hat sich in der Praxis bestens bewährt.

Da unterschiedliche Stückgüter auch unterschiedliche Gleiteigenschaften aufweisen, wird bevorzugt, daß der Neigungswinkel der schräg nach unten geneigten Kanäle einstellbar ist.

Zur weiteren Verbesserung der Gleiteigenschaften des Stückgutes kann auch vorgesehen werden, daß am Boden der schräg nach unten geneigten Kanäle eine Röllchenbahn angeordnet ist.

Damit in ihren Abmessungen nicht der Kanalbreite entsprechende Stückgüter einzeln hintereinander im Kanal gestapelt werden können, ist vorteilhafterweise die Breite der schräg nach unten geneigten Kanäle durch einsetzbare Trennwände einstellbar.

Zur Halterung der Kanäle, wobei auch eine Änderung des Neigungswinkels der Kanäle auf einfache Weise ermöglicht wird, ist mit besonderem Vorteil vorgesehen, daß die schräg nach unten geneigten Kanäle an ihren Enden an Stehern befestigt sind, wobei die Steher durch Querstreben sowie durch Längsstreben verbunden sind, um einen Gestellrahmen zu bilden, der zusammen mit den Kanälen ein Durchlaufregal verkörpert, wobei die Steher über ihre gesamte Länge Löcher aufweisen, in welche die Kanäle mittels Haken oder dergl. eingehängt sind.

Die Erfindung wird nun im einzelnen anhand von in der Zeichnung dargestellten Ausführungsbeispielen noch weiter erläutert. In der Zeichnung zeigen:
Fig.1 eine schematische Darstellung einer automatischen Anlage zum Kommissionieren von Stückgütern in Vorderansicht;
Fig.2 die Anlage nach Fig.1 in Draufsicht;
Fig.3 die Anlage nach Fig.1 in Seitenansicht;
Fig.4 ein praktisches Ausführungsbeispiel eines Durchlaufregals für eine solche Anlage in Seitenansicht; und
Fig.5 ein praktisches Ausführungsbeispiel eines Flügelradauswerfers, der bei diesem Durchlaufregal vorgesehen werden kann.

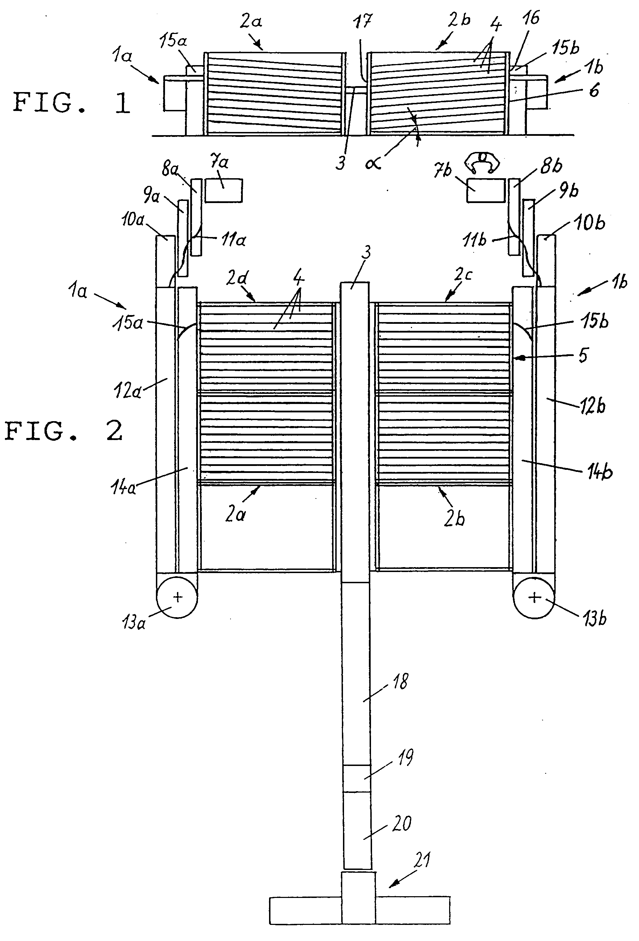

Die Anlage zum Kommissionieren von Stückgütern nach Fig.1 bis 3 besteht im wesentlichen aus drei Komponenten, nämlich den Befüllstationen 1a, 1b, den Durchlaufregalen 2a, 2b, 2c und 2d und dem Zentralband 3, welches zwischen den Durchlaufregalen angeordnet ist. Die Durchlaufregale 2a bis 2d bestehen aus einer Mehrzahl von Kanälen 4, die in horizontalen Reihen 5 und vertikalen Reihen 6 angeordnet sind, wobei jedem Kanal 4 eine bestimmte Art von Stückgut zugeordnet ist. Die Durchlaufregale 2a bis 2d dienen als Zwischenlager, welches sowohl rasch befüllt als auch rasch entleert werden kann.

Die Befüllstationen 1a, 1b beinhalten je ein Zufuhrband 7a, 7b, auf welches das Stückgut vom Bedienungspersonal aufgelegt oder aus einem Behälter gekippt wird. Im rechten Winkel zur Förderrichtung des Zuführbandes 7a, 7b sind drei nebeneinanderliegende und gestaffelt angeordnete Ausrichtbänder 8a, 8b, 9a, 9b, 10a, 10b aufgestellt, über welchen ein wellenartig geformtes Leitblech 11a, 11b angebracht ist, um das Stückgut von einem Ausrichtband auf das nächste Ausrichtband überzuleiten und gleichzeitig dabei in Längsrichtung auszurichten, wobei das erste Ausrichtband 8a, 8b und das dritte Ausrichtband 10a, 10b schnell laufen, das zweite Ausrichtband 9a, 9b hingegen langsam läuft, um den Ausrichtvorgang zu unterstützen. Vom dritten Ausrichtband 10a, 10b gelangt das längsausgerichtete Stückgut auf ein Steigband 12a, 12b, welches sich quer zu den Kanälen 4 bzw. parallel zu den nebeneinander angeordneten Durchlaufregalen 2a, 2d bzw. 2c, 2b erstreckt. Am abgabeseitigen Ende des Steigbandes 12a, 12b ist eine Umlenkscheibe 13a, 13b angeordnet, welche das Stückgut auf ein parallel zum Steigband 12a, 12b angeordnetes, höhenverstellbares Horizontalband 14a, 14b umleitet, welches mit der Umlenkscheibe 13a, 13b mechanisch verbunden ist. Das Steigband 12a, 12b ist im Bereich der Umlenkscheibe 13a, 13b an seinem ausgangsseitigen Ende mit dieser gelenkig verbunden, während das andere Ende in Längsrichtung frei beweglich gelagert ist, so daß bei einer Höhenverstellung des Horizontalbandes 14a, 14b und damit auch der Umlenkscheibe 13a, 13b ein Längenausgleich über das frei bewegliche Ende des Steigbandes 12a, 12b stattfinden kann. Oberhalb des Horizontalbandes 14a, 14b befindet sich als Leiteinrichtung nach Art eines gebogenen Leitbleches ein in Längsrichtung verstell- und positionierbarer Einweiser 15a, 15b, durch welchen das Stückgut in einen vorbestimmten Kanal 4 einer der horizontalen Reihen 5 umgelenkt bzw. eingeleitet werden kann.

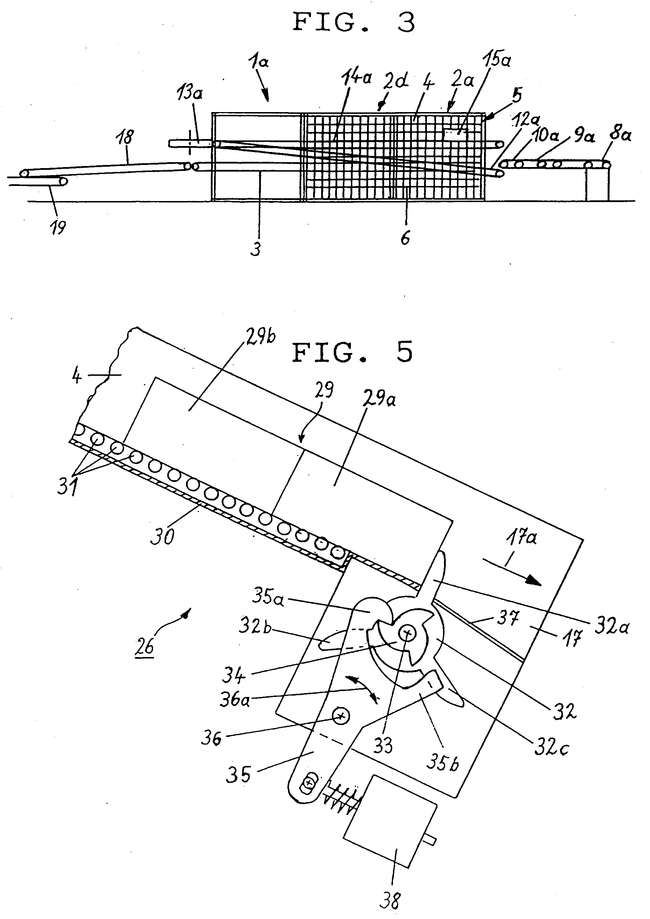

Wie aus Fig.1 und 3 ersichtlich ist, sind die Kanäle 4 schräg nach unten hin zum Zentralband 3 geneigt, so daß das Stückgut von selbst von einer Befüllstelle 16 am oberen Ende des jeweiligen Kanals 4 zu einer Ausgabestelle 17 am unteren Ende des Kanals 4 rutschen kann, wobei der Neigungswinkel α der Schräglage der Kanäle 4 je nach Beschaffenheit des Stückgutes einstellbar ist. An der Ausgabestelle 17 sind Einrichtungen zum Anhalten und Ausgeben des Stückgutes angeordnet, wie nachstehend anhand der Fig.5 näher erläutert wird.

Das Zentralband 3 ist wie das Horizontalband 14a, 14b höhenverstellbar ausgebildet, so daß es auf jedes Niveau einer der horizontalen Reihen 5 bzw. jeder Ausgabestelle 17 heb- und senkbar ist. Am ausgabeseitigen Ende des Zentralbandes 3 ist ein schnell laufendes Steigband 18 vorgesehen, welches mit dem Zentralband 3 gelenkig verbunden ist, und dessen freies Ende in Längsrichtung frei beweglich gelagert ist. Zum Längenausgleich des Steigbandes 18 ist unterhalb des freien Endes ein horizontales Band 19 angeordnet. Auf das Band 19 folgt ein schnell laufendes Horizontalband 20, welches das Stückgut schließlich zu einer Übergabestation bzw. zu einem Packtisch 21 bringt.

Wenn ein Kanal 4 leer ist bzw. eine festgelegte Vorratsschwelle unterschritten wird, teilt dies ein Sensor über einen Steuerrechner der Anlage einem Zentralrechner mit. Über diesen Zentralrechner wird dann im Lager bzw. Wareneingang das jeweilige Stückgut nachbestellt, welches dann in einem Behälter zum Zufuhrband 7a oder 7b gebracht wird. Vom Bedienungspersonal wird der Produktcode des Stückgutes in den Steuerrechner eingelesen, wodurch dieser weiß, in welchen Kanal 4 das Stückgut gebracht werden soll, worauf das höhenverstellbare Horizontalband 14a oder 14b zu derjenigen horizontalen Reihe 5 gehoben oder gesenkt wird, in der sich der anzusteuernde Kanal 4 befindet. Daraufhin wird der Einweiser 15a oder 15b direkt vor diesem Kanal 4 positioniert. Jetzt wird das Stückgut vom Bedienungspersonal auf das Zufuhrband 7a oder 7b gekippt und der Befüllungsvorgang gestartet, d.h. die Bänder werden in Betrieb gesetzt. An jedem der Einweiser 15a bzw. 15b ist eine Lichtschranke montiert, durch die das Stückgut gezählt wird. Sollten zu viele Stückgüter auf das Zufuhrband 7a, 7b gelegt worden sein, so würde beim Einweiser 15a, 15b ein Stau entstehen. Wenn die gezählte Anzahl der Stückgüter einen bestimmten Wert überschreitet, d.h. daß der Kanal 4 voll ist, so fährt der Einweiser 15a, 15b auf dem Horizontalband 14a, 14b von der Umlenkscheibe 13a, 13b weg in die äußerste Position. Dadurch entsteht ein Spalt zwischen dem Horizontalband 14a, 14b und dem Einweiser 15a, 15b, durch welchen das überschüssige Stückgut z.B. in einen Sammelkorb fällt. Über einen Sensor kann eine Messung des Kanalfüllstandes erfolgen, welche dem Steuerrechner zur Kontrolle übermittelt wird. Des weiteren sind Lichtschranken vor allem bei den Ausrichtbändern 8a, 8b, 9a, 9b, 10a, 10b angeordnet, die einen Stau des Stückgutes melden.

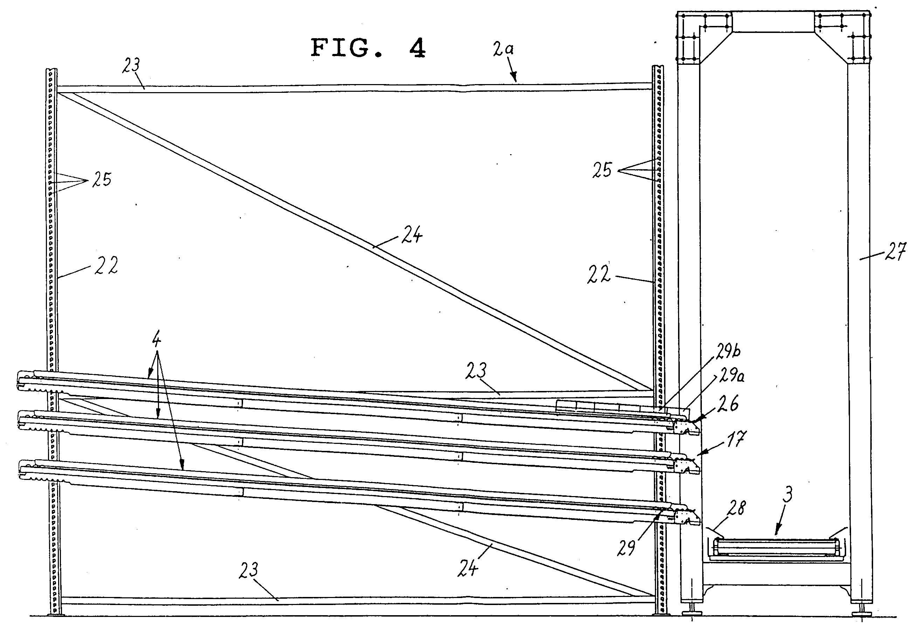

Beim praktischen Ausführungsbeispiel nach Fig.4 ist aus Gründen der besseren Übersicht nur ein Durchlaufregal 2a mit dem Zentralband 3 dargestellt. Das Durchlaufregal 2a besteht aus Stehern 22, die senkrecht zur Zeichenebene hintereinanderstehend in Abstand entsprechend der Breite der Kanäle angeordnet und mit waagrechten 23 und schrägen Querstreben 24 verbunden sind. Sämtliche Steher 22 sind am oberen und unteren Ende mit nicht dargestellten Längsstreben verbunden, um einen stabilen Gestellrahmen zu bilden. Die Steher 22 weisen an der zu den Kanälen gewandten Seite in Abstand über ihre gesamte Länge angeordnete Löcher 25 auf, in welche die Kanäle 4, z.B. mittels nicht dargestellter Haken oder dergl., eingehängt werden können, so daß damit verschiedene Neigungswinkel α der Kanäle 4 zur Horizontalen eingestellt werden können. An der Ausgabestelle 17 am unteren Ende jedes Kanals 4 ist eine Anhalte- und Ausgabeeinrichtung, vorzugsweise in Form eines Flügelradauswerfers 26, vorgesehen. In den Kanälen 4 sind einsteckbare Trennwände (nicht dargestellt) vorgesehen, um die Kanalbreite dem Stückgut anpassen zu können.

Das Zentralband 3 ist in einem massiven Gestellrahmen 27 mittels nicht dargestellten elektromechanischen, pneumatischen oder hydraulischen Antrieben heb- und senkbar angeordnet. Ein Gleitblech 28 stellt die Verbindung zwischen der Ausgabestelle 17 und dem Zentralband 3 her.

Um das selbsttätige Herabgleiten des Stückgutes 29 in den Kanälen 4 zu erleichtern, weist der Boden 30 der Kanäle 4 eine Röllchenbahn 31 auf, wie aus Fig.5 ersichtlich ist.

Beim Flügelradauswerfer 26 nach Fig.5 ist in der Nähe der Ausgabestelle 17 unmittelbar unter dem Kanalboden 30 ein Rotor 32 mit drei Flügeln 32a, 32b, 32c angeordnet, der zugleich die Ausgabe- und Anhalteeinrichtung bildet. Dieser Rotor 32 ist um eine Achse 33 drehbar, wobei die Tangentialrichtung des Rotors 32 an der Seite des Kanals 4 entsprechend der Rutschrichtung des Stückgutes 29 im Kanal 4, die durch den Pfeil 17a angedeutet ist, verläuft. Mit dem Rotor 32 ist ein Klinkenrad 34 verbunden, welches mit einer Klinke 35a und einer Klinkennase 35b, die sich auf einen Klinkenkörper 35 befinden, zusammenarbeitet. Der Klinkenkörper 35 ist in beiden Richtungen des Doppelpfeiles 36a um eine Achse 36 schwenkbar. Durch Eingriff der Klinke 35 in die Zähne des Klinkenrades 34 wird der Rotor 32 gegen Drehung gesperrt. Nach Entriegelung des Rotors 32 durch Lösen der Klinke 35 vom Klinkenrad 34 wird der den Anschlag bildende Flügel 32a durch den Schub des Stückgutes 29a, 29b in Ausgabe- bzw. Rutschrichtung gedreht und so weit geneigt, daß das vorderste Stückgut 29a passieren kann. Dabei wird gleichzeitig der nachfolgende Flügel 32b durch eine korrespondierende Öffnung 37 im Kanalboden 30 nach oben an die Unterseite des passierenden Stückgutes 29a herangeführt. Sobald das Stückgut 29a sich über den zuvor gesperrt gewesenen, als Anschlag wirkenden Flügel 32a neigt und diesen dabei noch stärker nach unten drückt, dreht der nachfolgende Flügel 32b im gleichen Maß nach oben und kommt in Anschlag gegen die Stirnseite des nächsten Stückgutes 29b. Ist der Rotor 32 gesperrt, hält dieser Flügel 32b das Stückgut 29b an. Der Klinkenmechanismus mit dem Klinkenkörper 35 und dem mit dem Rotor 32 drehfest verbundenen Klinkenrad 34 ist mit einem Betätigungsmechanismus versehen, der einen Elektromagneten 38 als Antrieb aufweist. Die Anordnung ist so getroffen, daß einerseits eine geringe Betätigungskraft zur Entriegelung ausreicht und andererseits eine Drehbewegung des Rotors 32 um einen Winkel von 120° bei einmaliger Betätigung des Klinkenmechanismus sichergestellt ist. Dabei sind die beiden auf dem Klinkenkörper 35 angeordneten Elemente, Klinke 35a und Klinkennase 35b, so aufeinander abgestimmt, daß jeweils auf das Klinkenrad 34 und damit auf den Rotor 32 eine die Ausgebebewegung unterstützende Drehbewegung ausgeübt wird. Der Rotor 32 kann auch mit Antriebsmitteln, z.B. einem Elektromotor, versehen sein. Ein solcher Antrieb kann selbständig zur Stellung des Rotors 32 koordiniert arbeiten. Vorteilhaft ist es auch, einen Antrieb des Rotors 32 zusammen mit einem Klinkenmechanismus vorzusehen und diesen Antrieb mit dem Antrieb des Klinkenmechanismus zu koordinieren.

## Patentansprüche

1. Automatische Anlage zum Kommissionieren von Stückgütern (29), mit einem Gestell, in welchem eine Mehrzahl von die Stückgüter aufnehmenden Kanälen (4) in horizontalen (5) und vertikalen Reihen (6) angeordnet sind, wobei die Kanäle (4) für einen Durchlauf der Stückgüter (29) ausgebildet sind und an einem Ende der Kanäle (4) eine Befülleinrichtung und am anderen Ende eine Ausgabestelle (17) zum Anhalten und Ausgeben der Stückgüter (29) vorgesehen sind, die Kanäle (4) von der Befüllstelle (16) hin zur Ausgabestelle (17) schräg nach unten geneigt sind, und wobei die Befülleinrichtung ein ansteigend verlaufendes Förderband (12a, 12b) aufweist, dessen Abgabeseite zu jeder horizontalen Reihe (5) der Kanäle (4) heb- und senkbar ausgebildet ist, dadurch gekennzeichnet, daß die Anlage ein vor der Ausgabestelle (17) der Kanäle (4) quer zu den Kanälen (4) laufendes Zentralband (3) zum Transportieren der aus den Kanälen (4) ausgegebenen Stückgüter (29) zu einer Sammelstelle aufweist, das Zentralband (3) zu jeder horizontalen Reihe (5) der Kanäle (4) heb- und senkbar ausgebildet ist, daß an das ansteigend verlaufende Förderband (12a, 12b) der Befülleinrichtung ein auf das abgabeseitige Ende dieses Förderbandes (12a, 12b) folgendes höhenverstellbares Horizontalband (14a, 14b) anschließt, und daß auf der Oberseite des Horizontalbandes (14a, 14b) ein Einweiser (15a, 15b) als Leiteinrichtung zum Einschieben der Stückgüter (29) in die Kanäle (4) angeordnet ist, der in Längsrichtung des Horizontalbandes (14a, 14b) verstell- und positionierbar ausgebildet ist, und mit dem jeder Kanal (4) zur Befüllung ansteuerbar ist.

2. Anlage nach Anspruch 1, dadurch gekennzeichnet, daß am abgabeseitigen Ende des Zentralbandes (3) ein Steigband (18) anschließt, welches mit dem Zentralband (3) gelenkig verbunden ist.

3. Anlage nach Anspruch 1, dadurch gekennzeichnet, daß am abgabeseitigen Ende des ansteigend verlaufenden Förderbandes (12a, 12b) eine Umlenkscheibe (13a, 13b) angeordnet ist, welche das Stückgut auf das höhenverstellbare Horizontalband (14a, 14b) umleitet, welches mit der Umlenkscheibe (13a, 13b) mechanisch verbunden ist.

4. Anlage nach Anspruch 1, dadurch gekennzeichnet, daß an der Ausgabestelle (17) der schräg nach unten geneigten Kanäle (4) ein Flügelradauswerfer (26) angeordnet ist.

5. Anlage nach Anspruch 1, dadurch gekennzeichnet, daß der Neigungswinkel (α) der schräg nach unten geneigten Kanäle (4) einstellbar ist.

6. Anlage nach Anspruch 1 oder 5, dadurch gekennzeichnet, daß am Boden (30) der schräg nach unten geneigten Kanäle (4) eine Röllchenbahn (31) angeordnet ist.

7. Anlage nach einem der Ansprüche 1, 5 oder 6, dadurch gekennzeichnet, daß die Breite der schräg nach unten geneigten Kanäle (4) durch einsetzbare Trennwände einstellbar ist.

8. Anlage nach einem der Ansprüche 4 bis 7, dadurch gekennzeichnet, daß die schräg nach unten geneigten Kanäle (4) an ihren Enden an Stehern (22) befestigt sind, wobei die Steher (22) durch Querstreben (23, 24) sowie durch Längsstreben verbunden sind, um einen Gestellrahmen (27) zu bilden, der zusammen mit den Kanälen (4) ein Durchlaufregal (2a bis 2d) verkörpert, wobei die Steher (22) über ihre gesamte Länge Löcher (25) aufweisen, in welche die Kanäle (4) mittels Haken oder dergl. eingehängt sind.

## Claims

1. An automatic equipment for commissioning items (29), comprising a support structure in which a plurality of channels (4) accommodating the items are arranged in horizontal (5) and vertical rows (6), the channels (4) being designed for the passage of items (29), and filling means being provided at one end of the channels (4) and a delivery site (17) for stopping and delivering the items (29) being provided at the other end thereof; the channels (4) being downwardly inclined from the filling site (16) towards the delivery site (17), and the filling means comprising an ascending conveyor belt (12a, 12b) whose discharge side is designed such that it may be lifted and lowered to each horizontal row (5) of the channels (4), characterised in that the equipment comprises a central belt (3) moving in front of the delivery site (17) of the channels (4), transversely to the channels (4), for transporting the items (29) delivered from the channels (4) to a collecting site; that the central belt (3) is provided so as to be liftable and lowerable to each horizontal row (5) of the channels (4); that the ascending conveyor belt (12a, 12b) of the filling means, at the discharge end of this conveyor belt (12a, 12b), is followed by a height-adjustable horizontal belt (14a, 14b), and that on the upper side of the horizontal belt (14a, 14b), a directing means (15a, 15b) is arranged as a guiding means for pushing the items (29) into the channels (4), which directing means is designed to be adjustable and positionable in the longitudinal direction of the horizontal belt (14a, 14b) and by which any channel (4) can be approached for filling thereof.

2. An equipment according to claim 1, characterised in that an ascending belt (18) follows at the discharge end of the central belt (3) and is articulately connected to the central belt (3).

3. An equipment according to claim 1, characterised in that a deflection disc (13a, 13b) is arranged at the discharge end of the ascending conveyor belt (12a, 12b), which deflects the items to the height-adjustable horizontal belt (14a, 14b) which is mechanically connected with the deflection disc (13a, 13b).

4. An equipment according to claim 1, characterised in that a vane ejector (26) is arranged at the delivery site (17) of the downwardly inclined channels (4).

5. An equipment according to claim 1, characterised in that the angle of inclination (α) of the downwardly inclined channels (4) is adjustable.

6. An equipment according to claim 1 or 5, characterised in that a roller conveyor path (31) is arranged at the bottom (30) of the downwardly inclined channels (4).

7. An equipment according to any one of claims 1, 5 or 6, characterised in that the width of the downwardly inclined channels (4) is adjustable by insertable separating walls.

8. An equipment according to any one of claims 4 to 7, characterised in that the downwardly inclined channels (4) are attached to uprights (22) with their ends, the uprights (22) being interconnected by transverse struts (23, 24) as well as by longitudinal struts so as to form a rack (27) embodying a throughput shelf (2a to 2d) in combination with the channels (4), the uprights (22) being provided with holes (25) over their entire longitudinal extension in which the channels (4) are suspended by means of hooks or the like.

## Revendications

1. Installation automatique pour la préparation de commandes d'articles (29), comprenant un bâti dans lequel plusieurs conduits (4) recevant les articles sont agencés selon des rangées horizontales (5) et verticales (6), les conduits (4) étant formés pour un passage des articles (29), et un dispositif de chargement étant prévu à une extrémité des conduits (4) et un poste de sortie (17) pour retenir et distribuer les articles (29) étant prévue à l'autre extrémité, les conduits (4) étant inclinés de façon oblique vers le bas depuis le poste de chargement (16) vers le poste de sortie (17), le dispositif de chargement présentant un convoyeur à bande (12a, 12b) s'étendant de façon ascendante et dont le côté de sortie est réalisé de façon à pouvoir être relevé et abaissé vers chaque rangée horizontale (5) des conduits (4), caractérisée en ce que l'installation présente une bande centrale (3) se déplaçant transversalement par rapport aux conduits (4) devant le poste de sortie (17) des conduits (4) pour transporter les articles (29) en sortie des conduits (4) vers une station collectrice, en ce que la bande centrale (3) est réalisée de façon à pouvoir être relevée et abaissée vers chaque rangée horizontale (5) des conduits (4), en ce qu'au convoyeur à bande (12a, 12b) s'étendant de façon ascendante du dispositif de chargement suit, à l'extrémité du côté de sortie de ce convoyeur à bande (12a, 12b), une bande horizontale (14a, 14b) réglable en hauteur, et en ce que sur la face supérieure de la bande horizontale (14a, 14b), un dispositif de déviation (15a, 15b) est agencé en tant que dispositif de guidage pour introduire les articles (29) dans les conduits (4), qui est réalisé de façon réglable et à pouvoir être positionné dans la direction longitudinale de la bande horizontale (14a, 14b) et par lequel on peut viser chaque conduit (4) pour le chargement.

2. Installation selon la revendication 1, caractérisée en ce qu'à l'extrémité de sortie de la bande centrale (3) suit une bande ascendante (18) qui est reliée de façon articulée à la bande centrale (3).

3. Installation selon la revendication 1, caractérisée en ce qu'un disque de déviation (13a, 13b) déviant les articles sur la bande horizontale réglable en hauteur (14a, 14b) qui est relié de façon mécanique avec le disque de déviation (13a, 13b), est agencé à l'extrémité de sortie du convoyeur à bande (12a, 12b) s'étendant de façon ascendante.

4. Installation selon la revendication 1, caractérisée en ce qu'un éjecteur à ailettes (26) est agencé sur le poste de sortie (17) des conduits (4) inclinés de façon oblique vers le bas,.

5. Installation selon la revendication 1, caractérisée en ce que l'angle d'inclinaison (α) des conduits (4) inclinés de façon oblique vers le bas peut être réglé.

6. Installation selon la revendication 1 ou 5, caractérisée en ce qu'une piste à roulettes (31) est agencée sur le fond (30) des conduits (4) inclinés de façon oblique vers le bas.

7. Installation selon l'une quelconque des revendications 1, 5 et 6, caractérisée en ce que la largeur des conduits (4) inclinée de façon oblique vers le bas peut être réglée au moyen de parois de séparation pouvant être insérées.

8. Installation selon l'une quelconque des revendications 4 à 7, caractérisée en ce que les conduits (4) inclinés de façon oblique vers le bas sont fixés à leurs extrémités à des montants (22), les montants (22) étant reliés par des entretoises transversales (23, 24) ainsi que longitudinales pour former un cadre (27) de bâti qui représente avec les conduits (4) un couloir de roulement (2a à 2d), les montants (22) présentant sur toute la longueur des trous (25) dans lesquels les conduits (4) sont accrochés au moyen de crochets ou analogues.
